# FASCICULE DE BREVET EUROPEEN

(11) **EP 3 053 162 B1**
(45) Date de publication et mention de la délivrance du brevet: **01.04.2020**
(21) Numéro de dépôt: 14777579.5
(22) Date de dépôt: 29.09.2014
(51) Int. Cl.: G10L 17/22, G10L 15/22, G06N 3/00

(54) **PROCEDE DE DIALOGUE ENTRE UNE MACHINE, TELLE QU'UN ROBOT HUMANOÏDE, ET UN INTERLOCUTEUR HUMAIN, PRODUIT PROGRAMME D'ORDINATEUR ET ROBOT HUMANOÏDE POUR LA MISE EN OEUVRE D'UN TEL PROCEDE**
VERFAHREN FÜR DEN DIALOG ZWISCHEN EINER MASCHINE, WIE ETWA EINEM HUMANOIDEN ROBOTER, UND EINEM MENSCHLICHEN ANSPRECHPARTNER, COMPUTERPROGRAMMPRODUKT UND HUMANOIDER ROBOTER ZUR DURCHFÜHRUNG EINES SOLCHEN VERFAHRENS
METHOD FOR DIALOGUE BETWEEN A MACHINE, SUCH AS A HUMANOID ROBOT, AND A HUMAN INTERLOCUTOR; COMPUTER PROGRAM PRODUCT; AND HUMANOID ROBOT FOR IMPLEMENTING SUCH A METHOD

(30) Priorité: 01.10.2013 FR 1359514
(43) Date de publication de la demande: 10.08.2016
(73) Titulaire: Softbank Robotics Europe, 75015 Paris (FR)
(72) Inventeur: PATRIS, Magali, F-75012 Paris (FR); HOUSSIN, David, F-75015 Paris (FR); MONCEAUX, Jérôme, F-75013 Paris (FR)
(74) Mandataire: Priori, Enrico
(86) Numéro de dépôt international: PCT/EP2014/070782
(87) Numéro de publication internationale: WO 2015/049198

(56) Documents cités:
- US-A1- 2006 047 362
- Hartwig Holzapfel: "Acquiring and Maintaining Knowledge by Natural Multimodal Dialog", , 29 juin 2009 (2009-06-29), pages 1-210, XP055117154, Karlsruhe (DE) Extrait de l'Internet: URL:http://isl.anthropomatik.kit.edu/cmu-k it/downloads/PhD_2009_04_Acquiring_and_Mai ntaining_Knowledge_by_Natural_Multimodal_D ialog.pdf [extrait le 2014-05-09]
- MIKIO NAKANO ET AL: "A Robot That Can Engage in Both Task-Oriented and Non-Task-Oriented Dialogues", HUMANOID ROBOTS, 2006 6TH IEEE-RAS INTERNATIONAL CONFERENCE ON, IEEE, PI, 1 décembre 2006 (2006-12-01), pages 404-411, XP031053052, ISBN: 978-1-4244-0199-4
- FILIP KRSMANOVIC ET AL: "Have we met? MDP Based Speaker ID for Robot Dialogue", PROCEEDINGS OF INTERSPEECH 2006, 17 septembre 2006 (2006-09-17), XP055117559,

## Description

La présente invention porte sur un procédé de dialogue entre une machine et un être humain. La machine peut être tout dispositif de traitement de données tel qu'un ordinateur, le processeur d'un « smartphone » ou un robot, notamment humanoïde, comprenant au moins un processeur embarqué, et le dialogue peut s'effectuer oralement. L'invention porte également sur un produit programme d'ordinateur et sur un robot, de préférence humanoïde, pour la mise en œuvre d'un tel procédé.

Un « robot humanoïde » peut se définir comme un robot présentant certains attributs de l'apparence et des fonctionnalités d'un être humain tel qu'un tronc, une tête, des bras, des jambes, la capacité à communiquer oralement avec un être humain à l'aide de moyens de reconnaissance et de synthèse vocale, etc. Ce type de robot a pour objectif de réduire les distances cognitives entre l'homme et la machine. Une des caractéristiques les plus importantes d'un robot humanoïde est sa capacité à soutenir un dialogue aussi naturel que possible avec un interlocuteur humain. Cette capacité est essentielle pour le développement de « robots compagnons », destinés à aider des personnes âgées, malades ou simplement seules dans les nécessités de la vie quotidienne, et à fournir à ces personnes un substitut acceptable à la présence d'un assistant personnel humain.

Les procédés de dialogue pour robots humanoïdes connus de l'art antérieur ne sont pas satisfaisants, car ils conduisent à des dialogues répétitifs et stéréotypés, en tout cas peu naturels.

L'article de S. Rosenthal et M. Veloso « Mixed-Initiative Long-Term Interactions with an All-Day-Companion Robot », dans Dialogs with Robots : Papers from the AAAI Fall Symposium (FS-10-05), pages 97 - 102*,* décrit un robot susceptible de guider un être humain dans une visite, par exemple du département de robotique d'une université. Le robot est programmé pour éviter les répétitions au cours du dialogue ; mais deux interlocuteurs humains différents se verront proposer des dialogues sensiblement identiques.

Le document US 7,539,656 décrit un procédé par lequel une machine dialogue avec un interlocuteur humain pour obtenir des informations nécessaires à lui fournir un service - par exemple, prendre une commande pour le petit-déjeuner. Un tel dialogue est très stéréotypé et ne vise par à reproduire une conversation. Le procédé ne convient donc pas à la réalisation de « robots compagnons » performants.

Le document US 7,987,091 décrit un procédé par lequel une machine entretient un dialogue « personnalisé » et « progressif » avec un ou plusieurs interlocuteur. Le dialogue est personnalisé car la machine conduit le dialogue en fonction de différentes informations sur les interlocuteurs, stockées dans sa mémoire. Il est progressif car la machine acquiert de nouvelles informations au cours du dialogue. Toutefois, le dialogue reste peu naturel, car les phases d'acquisition et d'utilisation de l'information sont nettement séparées.

La thèse de Hartwig Holzapfel: "Acquiring and Maintaining Knowledge by Natural Multimodal Dialog" divulgue un robot humanoïde avec la possibilité d'acquérir des informations sur l'interlocuteur en lui posant des questions en utilisant d'arbres syntactiques.

L'invention vise à surmonter les inconvénients précités de l'art antérieur en procurant un procédé de dialogue avec une machine - et notamment un robot - se rapprochant davantage d'un dialogue naturel avec un autre être humain. Plus précisément, l'invention vise à rendre possible l'instauration d'un dialogue adapté à l'interlocuteur (non stéréotypé), progressif et naturel, ce qui permet l'instauration d'un véritable lien affectif entre l'interlocuteur humain et le robot. La progression s'entend aussi bien à l'intérieur d'un même dialogue (ou « session de dialogue ») qu'entre deux dialogues successifs, même espacés temporellement, avec le même interlocuteur humain.

Un objet de l'invention, permettant d'atteindre cet objectif, est un procédé de dialogue entre une machine et au moins un interlocuteur humain, comportant les étapes suivantes, mises en œuvre par ladite machine :
a) identifier ledit interlocuteur humain ;
b) extraire d'une base de données un profil d'interlocuteur comprenant une pluralité de variables de dialogue, au moins une valeur étant attribué à au moins une desdites variables de dialogue ;
c) recevoir et analyser au moins une phrase en provenance dudit interlocuteur, analyser ladite ou de chaque dite phrase en provenance dudit interlocuteur pour en extraire au moins une valeur à attribuer à au moins une variable de dialogue dudit profil d'interlocuteur et enregistrer ladite ou chaque dite valeur dans ledit profil d'interlocuteur; et
d) formuler et émettre au moins une phrase de réponse en fonction au moins de ladite phrase reçue et interprétée lors de l'étape c) et d'une dite variable de dialogue dudit profil d'interlocuteur.
Caractérisé en ce que :
- ladite ou au moins une dite phrase reçue et analysée lors de l'étape c) est une phrase prononcée par ledit interlocuteur spontanément ou suite à une phrase non interrogative émise par ladite machine ;
- l'analyse de ladite ou d'au moins une phrase en provenance dudit interlocuteur et la formulation de ladite ou d'au moins une phrase de réponse sont effectuées au moyen d'une pluralité de modèles de phrases (MDP) représentés par des arbres syntaxiques (AS1, AS2) respectifs ;
- ladite étape d) est mise en oeuvre au moyen d'une pluralité de règles (R) associant au moins un modèle de phrase en provenance dudit interlocuteur et au moins un modèle de phrase de réponse ;- au moins une dite règle est marquée par une étiquette (TG) identifiant un sujet de conversation ; et
- lors de ladite étape d), un nombre variable d'étiquettes identifiant chacune un sujet de conversation déterminé sont activées ou désactivées en fonction d'au moins un paramètre du dialogue.

L'identification de l'interlocuteur et l'utilisation d'un profil d'interlocuteur pour formuler les phrases de réponse permet une personnalisation du dialogue. Le terme « réponse » doit être interprété largement pour couvrir toute phrase émise en réponse à un stimulus, pas étroitement en tant que signifiant « réponse à une question ».

L'analyse des réponses permet à la machine d'enrichir le profil d'interlocuteur au cours du dialogue, voire au fil des dialogues successifs. On peut dire qu'elle apprend à connaitre de mieux en mieux son interlocuteur, et utilise sa connaissance pour affiner le dialogue.

En outre, le dialogue n'est pas stéréotypé car la réponse de la machine dépend à la fois du profil de l'interlocuteur et d'au moins une phrase que ce dernier vient de prononcer. Contrairement à ce qui se passe dans un procédé selon le document US 7,987,091 précité, il n'y a pas de séparation entre un « dialogue d'acquisition » (d'information) et un « dialogue d'utilisation » (d'information). Conformément à l'invention, au cours d'un même dialogue la machine utilise les informations sur son interlocuteur dont elle dispose déjà et acquiert des nouvelles informations, qui peuvent être utilisées immédiatement ou ultérieurement.

L'analyse de ladite ou d'au moins une phrase en provenance dudit interlocuteur et la formulation de ladite ou d'au moins une phrase de réponse peuvent être effectuées au moyen d'une pluralité de modèles de phrases (« patterns ») représentés par des arbres syntaxiques respectifs.

Avantageusement, au moins certains desdits modèles de phrases contiennent au moins un pointeur à une variable de dialogue dudit profil d'interlocuteur. Lors de la formulation d'une réponse, la machine remplace le pointeur par la valeur de la variable de dialogue stockée dans le profil d'interlocuteur. Réciproquement, lors de l'analyse d'une phrase reçue, la machine interprète un mot déterminé de ladite phrase - occupant la place qui, dans le modèle, est tenue par le pointeur - comme étant une valeur à stocker dans le profil d'interlocuteur en tant que valeur de la variable de dialogue correspondante.

Avantageusement, au moins certains desdits modèles de phrases peuvent contenir au moins un pointeur à au moins un ensemble de termes interchangeables dans une phrase, dit « concept ».

Ladite étape d) peut être mise en œuvre au moyen d'une pluralité de règles associant au moins un modèle de phrase en provenance dudit interlocuteur et au moins un modèle de phrase de réponse. Ces règles peuvent à leur tour être représentées par des structures de type « arbre ».

Dans ce cas, lors de ladite étape d), au moins une dite règle peut associer à un même modèle de phrase en provenance dudit interlocuteur une pluralité de modèles de phrases pouvant servir en tant que phrases de réponse ; en outre, parmi lesdits modèles de phrases de réponse, peuvent être écartés ceux qui contiennent un pointeur à une variable de dialogue à laquelle aucune valeur n'est attribuée dans ledit profil d'interlocuteur. Ainsi, la machine peut choisir sa réponse en fonction de ce qu'elle sait - ou ne sait pas - sur son interlocuteur.

Avantageusement, au moins une dite règle peut être marquée par une étiquette (« tag ») identifiant un sujet de conversation et, lors de ladite étape d), la ou les règles marquées par au moins une étiquette identifiant un sujet de conversation déterminé peuvent être activées ou désactivées en fonction d'au moins un paramètre du dialogue (valeur - ou non renseignement - d'une ou plusieurs variables de dialogue, paramètre contextuel, historique du dialogue...). Il s'agit là d'une modalité technique de réalisation de la progression du dialogue.

Ledit profil d'interlocuteur peut comprendre également un historique de dialogue et, lors de ladite étape d), ladite ou au moins une dite réponse peut être également formulée en fonction dudit historique de dialogue. Cela assure la progression du dialogue et évite les répétitions.

Lors de ladite étape d), ladite ou au moins une dite réponse peut être également formulée en fonction d'au moins un paramètre contextuel acquis ou déterminé par ladite machine. Ce paramètre peut notamment être une heure, déterminée par une horloge : ainsi, par exemple, à l'approche de midi, la conversation pourra porter sur le déjeuner. Le paramètre peut également être une date déterminée par un calendrier, une température ou luminosité ambiante acquise par un capteur, etc.

Lors de ladite étape a), ledit interlocuteur humain peut être identifié au moyen dispositif d'acquisition d'images tel qu'une caméra, par reconnaissance faciale ou lecture d'un code graphique présenté à ladite caméra. D'autres modes d'identification (biométrie, code entré par l'intermédiaire d'un clavier, reconnaissance vocale...) sont également possibles ;

Lors de ladite étape b), la machine peut accéder à un serveur distant par l'intermédiaire d'un réseau de communication et télécharger ledit profil d'interlocuteur de ladite base de données qui est stockée sur ledit serveur distant. La machine peut également, ayant accédé audit serveur distant par l'intermédiaire dudit réseau de communication, charger dans ladite base de données un profil d'interlocuteur mis à jour par l'enregistrement d'au moins une valeur attribuée à au moins une variable de dialogue extraite, lors de ladite étape c), d'au moins une phrase en provenance dudit interlocuteur. En variante, la base de données peut être stockée localement.

De préférence, ladite machine comprend un processeur embarqué dans un robot humanoïde. D'autres modes de réalisation sont cependant possibles ; par exemple la machine peut être un ordinateur de bureau, un « smartphone », un ordinateur de bord d'un véhicule, etc.

Un autre objet de l'invention est un produit programme d'ordinateur (c'est-à-dire un programme d'ordinateur en format exécutable stocké sur dans un support matériel de stockage tel qu'une mémoire à semiconducteur permanente ou volatile, ou un disque de type CD-ROM ou disque dur) pour la mise en œuvre d'un tel procédé.

Encore un autre objet de l'invention est un robot humanoïde comprenant un processeur embarqué programmé pour mettre en œuvre un tel procédé. Avantageusement, un tel robot humanoïde peut comprendre également :
- un dispositif d'acquisition d'images, tel une caméra, coopérant avec ledit processeur embarqué pour identifier un interlocuteur humain ;
- un dispositif d'acquisition sonore, tel un microphone ou réseau de microphones, coopérant avec ledit processeur embarqué pour recevoir au moins une phrase prononcé par ledit interlocuteur humain ; et
- un dispositif d'émission sonore, tel un haut-parleur, coopérant avec ledit processeur embarqué pour émettre une dite phrase de réponse.

D'autres caractéristiques, détails et avantages de l'invention ressortiront à la lecture de la description faite en référence aux dessins annexés donnés à titre d'exemple et qui représentent, respectivement :
- la figure 1, un robot humanoïde dialoguant avec un interlocuteur humain et communiquant avec un serveur distant conformément à un mode de réalisation de l'invention ;
- la figure 2, un ordinogramme d'un procédé selon un mode de réalisation de l'invention ; et
- les figures 3A, 3B, 3C et 3D des structures à arbre utilisées pour la mise en œuvre d'un procédé selon l'invention.

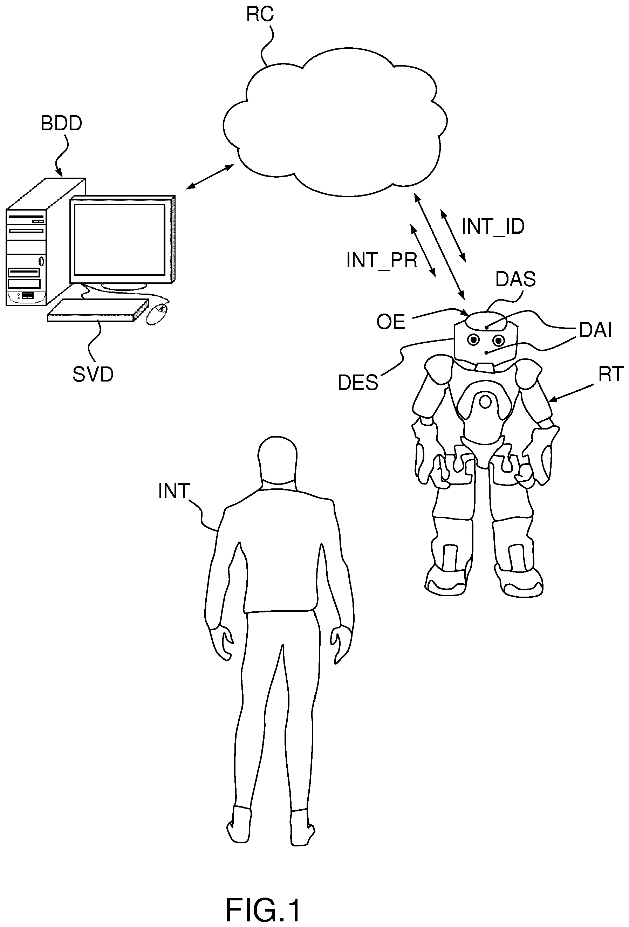

La figure 1 représente un robot humanoïde RT dialoguant avec un interlocuteur humain INT. Le robot comprend, outre un corps articulé reproduisant la forme d'un être humain :
- un processeur ou ordinateur embarqué OE, localisé par exemple dans la tête du robot, mettant en œuvre le procédé de dialogue de l'invention ; il peut s'agir d'un processeur dédié à cette tâche, ou accomplissant également d'autres tâches et, à la limite, contrôlant à lui seul le robot ;
- un ou plusieurs dispositifs d'acquisition d'images (caméras) DAI, localisés dans la tête du robot, par exemple dans sa bouche et/ou sur son front, pour acquérir une image de l'interlocuteur INT ;
- un dispositif d'émission sonore DES (haut-parleur), localisé par exemple sur les côtés de la tête du robot, pour permettre à ce dernier de « parler » ; et
- un ou plusieurs dispositifs d'acquisition sonore DAS (microphones), localisés par exemple sur la surface supérieure de la tête du robot, pour permettre à ce dernier d'entendre.

Les dispositifs d'acquisition d'image et d'acquisition sonore fournissent des données d'entrée au processeur OE, et notamment :
- au moins une image acquise par les dispositifs DAI, permettant l'identification de l'interlocuteur ; il peut s'agir d'une image du visage dudit interlocuteur, ou d'un code graphique montré par ce dernier dans le but de faciliter l'identification (par exemple, un code QR obtenu grâce à une application dédiée sur « smartphone ») ;
- des sons pouvant représenter des phrases émises par l'interlocuteur, devant être reconnues et analysées.

Le processeur OE stocke dans une mémoire et exécute des logiciels de reconnaissance d'images et de reconnaissance vocale (connus en soi) pour traiter ces données d'entrée. En variante, ces logiciels ou certains d'entre eux peuvent être stockés dans une base de données extérieure, comme cela sera expliqué plus loin.

Le dispositif d'émission sonore DES est piloté par le processeur OE.

Le robot RT est en communication, par l'intermédiaire d'un réseau RC (par exemple, Internet auquel il accède via une connexion WiFi) avec un serveur distant SVD qui mémorise une base de données de « profils d'interlocuteurs ».

Le robot transmet au serveur SVD une donnée d'identification INT_ID de l'interlocuteur INT, obtenue en appliquant un algorithme de reconnaissance d'images (reconnaissance du visage ou d'un code graphique) aux images obtenues via les dispositifs DAI. Dans certains cas, cette donnée peut être directement une image, auquel cas l'étape d'identification est mise en œuvre par le serveur distant. Par exemple, dans un mode de réalisation particulier un utilisateur s'enregistre sur le serveur SVD au moyen de son « smartphone » ; le serveur lui envoie, sur ledit smartphone, un code QR ; l'utilisateur affiche ce code sur l'écran du smartphone et le montre au robot en le présentant devant l'une de ses caméras ; le robot retransmet l'image du code QR au serveur, qui associe ladite image à l'utilisateur - qui devient à ce point un interlocuteur identifié. Dans d'autres modes de réalisation, l'identification se fait à partir d'une image du visage de l'interlocuteur, par reconnaissance de sa voix ou simplement à partir d'une phrase de présentation prononcée au début du dialogue, telle que « Bonjour, je suis Jean ».

Sur la base de la donné d'identification reçue, le serveur SVD récupère de la base de données BDD un profil d'interlocuteur INT_PR et le transmet au robot RT via le réseau RC. Le profil d'interlocuteur est un fichier contenant une liste de variables auxquelles est associée une (voire plusieurs) valeurs dépendant de l'utilisateur. Un extrait du profil de l'interlocuteur « Jean Dupont » peut être par exemple les données personnelles suivantes :
Identifiant de l'interlocuteur : 00011
Prénom : Jean
Age : 35
Profession : Ingénieur
Centres d'intérêt : natation ; course à pied ; cyclisme
Animaux domestiques :
Langue maternelle : français
Autres langues :

Cet extrait comporte huit variables : un identifiant de l'interlocuteur, « Prénom », « Nom », « Age », « Profession », « Centres d'intérêt », « Animaux domestiques », « Langue maternelle » et « Autres langues ». Les quatre premières variables prennent une valeur unique, qui leur est effectivement attribuée. La variable « Centres d'intérêts » peut prendre plusieurs valeurs en même temps ; en l'espèce, les valeurs « natation », « course à pied » et « cyclisme » lui sont attribuées. La variable « Animaux domestiques » peut prendre des valeurs multiples, mais elle n'est pas renseignée Les deux dernières variables « Langue maternelle » (valeur unique : « français ») et « Autres langues » (valeurs multiples possibles, ici non renseignée) sont particulièrement importantes. En effet, dans une version multi-langues du procédé, le processeur peut utiliser les valeurs de ces variables pour déterminer dans quelle langue s'adresser à l'interlocuteur (lorsque le robot est le premier à parler) ou quel paramétrage de langue utiliser pour la reconnaissance et l'analyse des phrases entendues.

Le processeur du robot OE utilise les valeurs attribuées aux variables (ou le fait qu'elles ne sont pas renseignées) pour gérer le dialogue avec l'interlocuteur INT, comme cela sera détaillé plus loin. Pour cette raison les variables sont dites « variables de dialogue ».

Comme cela sera également détaillé plus loin, le processeur OE peut également être amené à modifier le contenu du profil d'interlocuteur en fonction du dialogue. Par exemple, il peut apprendre que Jean Dupont parle aussi anglais, et attribuer la valeur « anglais» à la variable « Autres langues » de son profil. Cet apprentissage se fait en analysant les phrases prononcées par l'interlocuteur (en réponse à une question du robot, suite à une phrase non interrogative émise par le robot ou même spontanément). Après une telle mise à jour (immédiatement après, ou à la fin du dialogue, ou à des intervalles réguliers...) le processeur transmet alors au serveur SVD une version modifiée du profil d'interlocuteur, qui est enregistrée dans la base de données BDD. En variante, la base de données BDD peut être stockée localement, auquel cas la connexion au réseau RC n'est pas nécessaire.

Un exemple de dialogue dans lequel le robot utilise les informations contenues dans le profil de l'interlocuteur et enrichit ce même profile est présenté ci-après. L'interlocuteur est «Jean» (identifiant 00011), dont le profile au début du dialogue a été présenté plus haut. Les phrases prononcées par le robot et par l'interlocuteur humain sont en italique ; les mots correspondant à des variables de dialogue (utilisées ou acquises) ou à des données d'historique des dialogues passées (également enregistrés dans le profil de l'interlocuteur) sont soulignés.

Le robot détecte l'entrée d'une personne dans le champ visuel de sa caméra (ou d'une de ses caméras) et identifie son visage comme étant celui de l'interlocuteur « 00011 ». Il charge en mémoire le profil d'interlocuteur correspondant et utilise l'information « Nom » pour personnaliser une phrase de salutation pariellement pré-rédigée. Le robot utilise également une information relative à l'historique des dialogues : le fait qu'un autre dialogue avec le même interlocuteur a eu lieu la veille.
- Robot: *Bonjour Jean! Merci de revenir me voir, ça me fait plaisir! Comment vas-tu depuis hier?*

L'interlocuteur répond par une question :
- Humain: *Bien et toi?*

La question posée par l'interlocuteur (« *et toi ?* ») déclenche une réponse, qui en l'espèce est stéréotypée :
- Robot: *Très bien merci!*

Pour poursuivre le dialogue, le robot a recours à une donné contextuelle : la date - en l'espèce, le 9 mai, journée de l'Europe (cette information étant stockée dans la mémoire du robot) :
- Robot : *Dis-moi, tu savais qu'aujourd'hui c'est la journée de l'Europe? Je trouve ça formidable, ces pays qui s'unissent, avec toutes les langues et cultures différentes. D'ailleurs, je parle plusieurs langues européennes! Et toi, Jean, tu parles d'autres langues que le français?*

L'utilisation des données contextuelles sera expliquée en détail plus loin.

Pour personnaliser la phrase ci-dessus (dont la structure générale ou « modèle» est pré-rédigée, comme cela sera expliqué en détail plus loin) le robot utilise trois informations du profil de l'interlocuteur : son nom (« Jean »), la valeur (« français ») de la variable « Langue maternelle » et le fait que la variable « Autres langues » n'est pas renseignée. La réponse de l'interlocuteur permet au robot d'enrichir son profil, en attribuant la valeur « anglais » à cette variable :
- Humain: *Oui, je parle anglais couramment.*

La réplique du robot utilise cette valeur nouvellement stockée, la valeur (« Ingénieur ») qui avait été attribuée en précédence à la variable « Profession » et une « règle » - enregistrée dans sa mémoire - associant certaines valeurs de la variable « Autres langues » et certaines valeurs de la variable « Profession » :
- Robot: *Ah c'est bien, c'est vrai que l'anglais est très utile pour le métier d'ingénieur.*

Le robot peut aussi proposer à l'interlocuteur de poursuivre la conversation dans la langue qui vient d'être enregistrée dans le profil :
- Robot: *Tu veux qu'on parle un peu en anglais?*
- Humain: *Ok, ça me fera pratiquer.*
- Robot: *Nice, let's go!*

La réponse affirmative de l'interlocuteur déclenche un dialogue en anglais (on suppose que le robot est programmé pour dialoguer dans cette langue).

A la fin du dialogue, le profil de l'interlocuteur a changé, car la valeur « anglais » a été attribuée à sa variable « Autres langues » :
Identifiant de l'interlocuteur : 00011
Prénom : Jean
Age : 35
Profession : Ingénieur
Centres d'intérêt : natation ; course à pied ; cyclisme
Animaux domestiques :
   Langue maternelle : français
Autres langues : anglais

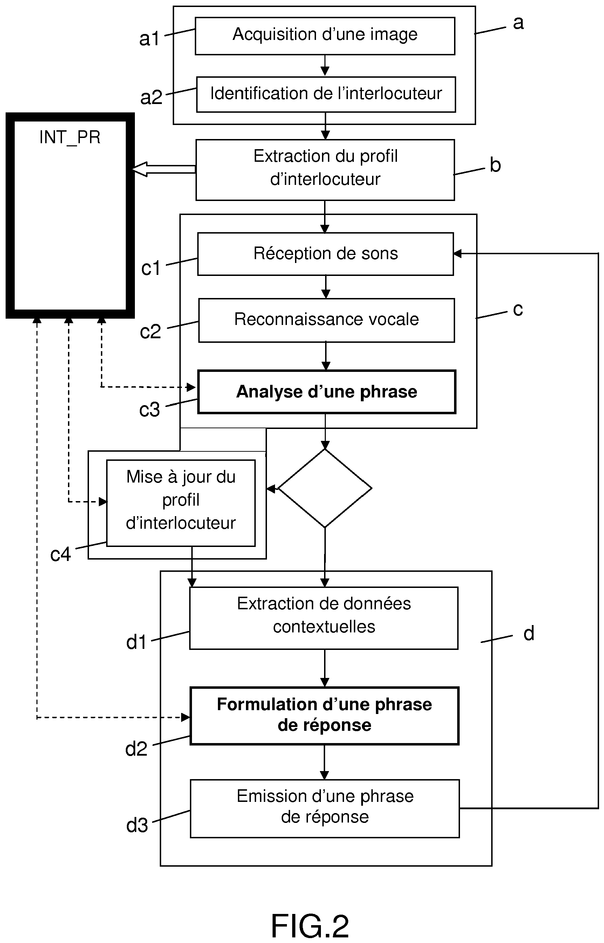

L'organigramme de la figure 2 illustre plus en détail la mise en œuvre d'un procédé selon un mode de réalisation de l'invention.

L'étape a) d'identification d'un interlocuteur humain comprend deux sous-étapes :
- une sous-étape a1 d'acquisition d'une image qui, comme expliqué plus haut, peut être une image du visage de l'interlocuteur ou bien d'un code graphique d'identification ;
- une sous-étape a2 d'identification de l'interlocuteur par reconnaissance de ladite image ; comme expliqué plus haut, cette étape peut être exécuté localement ou par un serveur distant.

D'autres modes d'identification sont également possibles.

L'étape b) comprend l'extraction d'un profil d'interlocuteur INT_PR, correspondant à l'interlocuteur identifié lors de l'étape a), depuis une base de données stockée localement ou sur un serveur distant.

Optionnellement, après l'étape b) le robot peut prendre l'initiative du dialogue, par exemple en saluant l'interlocuteur et en l'appelant par son nom (si cette variable est renseignée dans le profil d'interlocuteur, ce qui devrait normalement être le cas). Cette étape n'est pas représentée pour ne pas surcharger la figure.

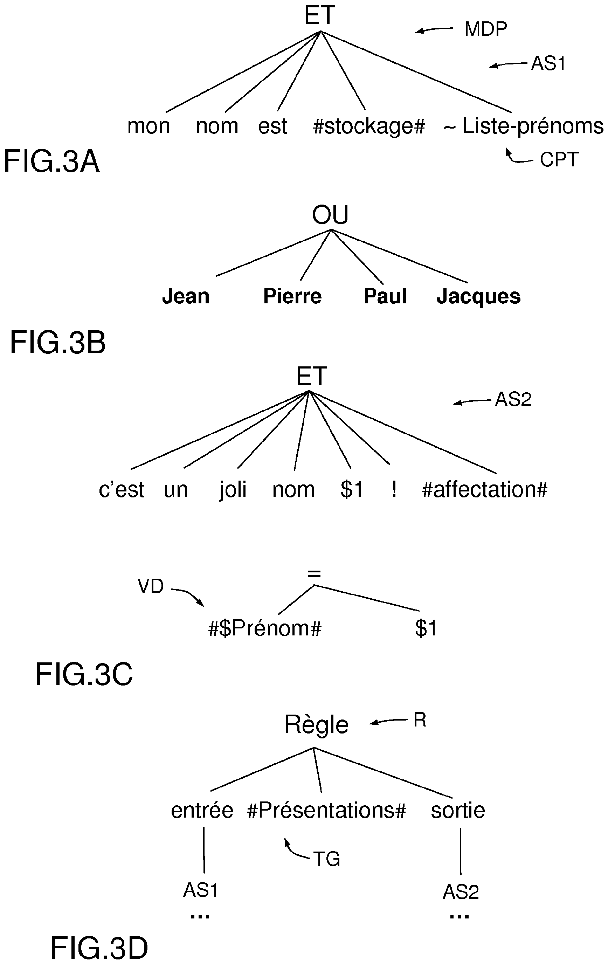

L'étape c) comprend quatre sous-étapes :
- une sous-étape c1 de réception de sons provenant dudit utilisateur au moyen du ou des microphones DAS ;
- une sous-étape c2 de reconnaissance vocale, pratiquée sur les sons reçus lors de la sous-étape c1 en utilisant des algorithmes connus, pour en extraire des phrases ;
- une sous-étape c3 d'analyse d'une phrase ; cette sous-étape sera décrite plus en détail à l'aide des figures 3A - 3D ;
- si l'analyse effectuée lors de la sous-étape c3 à conduit à l'identification d'une nouvelle valeur à attribuer une variable du profil, l'étape c comporte également une sous-étape c4 de mise à jour dudit profil.

Dans des modes de réalisation plus simples dans lesquels le dialogue se fait par écrit, par l'intermédiaire d'un clavier et d'un écran, les sous-étapes c1 et c2 sont remplacées par une simple acquisition de texte.

L'étape d) de réponse comprend trois sous-étapes :
- une sous-étape d1, optionnelle, d'extraction de données contextuelles : date, heure du jour, données météorologiques, présence d'autres personnes... ;
- une sous-étape d2 de formulation d'une phrase de réponse ; cette sous-étape sera décrite plus en détail à l'aide des figures 3A -3D ; et
- une sous-étape d3 d'émission de la phrase de réponse élaborée lors de la sous-étape d2 ; cette sous-étape est mise en œuvre en utilisant des algorithmes connus de synthèse vocale et le ou les haut-parleurs DES.

Le procédé est donc itéré à partir de la sous-étape c1, le robot se mettant en attente d'une nouvelle phrase de l'interlocuteur.

L'algorithme peut se terminer après l'écoulement d'un délai maximal d'attente. En outre, l'analyse de phrase effectuée lors de la sous-étape c3 peut indiquer au robot que l'interlocuteur souhaite mettre fin au dialogue (par exemple, un tel souhait peut être déduit de la détection d'une phrase comme « je dois partir»; « au-revoir » ; « à bientôt »...). De même, en cas de disparition de l'interlocuteur du champ visuel des caméras DAI (sous-étape D1) le robot peut décider de mettre fin au dialogue. Ces variantes ne sont pas illustrées pour ne pas surcharger la figure.

Aussi bien l'analyse (sous-étape c3) que la formulation (sous-étape d2) de phrases par le processeur du robot mettent en œuvre des « modèles » ou « motifs » (an anglais « patterns »). Un modèle de phrase est constitué par des mots, des pointeurs à des variables, des « concepts » et des « étiquettes », ainsi que des indicateurs d'action, reliés par un ou plusieurs opérateurs logiques. Les modèles de phrase peuvent être représentés par une structure en arbre dite « arbre syntaxique ».

La figure 3A montre un premier exemple d'arbre syntaxique AS1 correspondant à un modèle MDP utilisé, lors d'une mise en œuvre de la sous-étape c3 du procédé, pour analyser une phrase prononcée par l'interlocuteur humain. Ce modèle s'écrit, dans un langage de script développé dans ce but :

### « mon nom est_∼Liste-prénoms »

Il comprend trois mots (« mon », « nom », « est ») et un concept (« *∼Liste-prénoms* »). Le tilde « ∼ » identifie un concept, le caractère « _ » indique que le concept doit être stocké.

Les mots et le concept - référence CPT - forment les feuilles de l'arbre syntaxique AS, reliées par un opérateur logique « ET » formant la racine de l'arbre.

Le concept est constitué par une pluralité de mots sémantiquement proches et interchangeables dans une phrase - ici, il s'agit d'une liste de prénoms. Le concept « *Liste-prénoms* » est représenté lui aussi par un arbre (figure 3B) dont les feuilles sont les mots interchangeables («Jean », « Pierre », « Paul », « Jacques », ...) et la racine un opérateur logique « OU ». Si l'interlocuteur dit, par exemple « Mon nom est Jean », le processeur du robot vérifie que cette phrase correspond au motif et stocke (commande #stockage# qui correspond au caractère « _ » dans le motif ; les caractères « dièse » - # - indiquent qu'il ne s'agit pas d'un nom qui doit être prononcé) la valeur « Jean » dans une variable temporaire de la mémoire du robot.

La figure 3C illustre un autre exemple d'arbre syntaxique correspondant à un modèle MDP utilisé, lors d'une mise en œuvre des sous-étapes c4 (mise à jour du profil d'interlocuteur) et d2 (formulation d'une phrase de réponse). Ce modèle s'écrit :

### « c'est un joli nom $1 ! $INT/Prénom=$1 »

Il comprend quatre mots (« c'est », « un », « joli », « nom »), un marqueur d'intonation (« ! ») et un pointeur à la variable temporaire dans laquelle le prénom de l'interlocuteur a été stockée (« $1 » - le symbole « $ » identifiant les variables). Il comprend également une opération d'affectation à la variable de dialogue VD « $INT/Prénom » de la valeur contenue dans la variable temporaire $1. L'opération d'affectation est également représentée par un arbre (bas de la figure 3B), associant la variable « INT/Prénom » et le pointeur « $1 » par l'intermédiaire d'un opérateur d'égalité « = ».

Des règles permettent au processeur d'associer les entrées (phrases prononcées par l'interlocuteur) à des sorties (phrases de réponse émises par le robot). La figure 3D illustre l'arbre R représentant une telle règle. Il s'agit là d'une règle très simple qui associe le modèle représenté par l'arbre AS1 (entrée) au modèle représenté par l'arbre AS2 (sortie). Ainsi, par application de cette règle, lorsque l'interlocuteur dit « mon nom est Jean », le robot répond « c'est un joli nom, Jean ! » - « Jean » pouvant être remplacé par tout autre prénom listé dans le concept « Liste-prénoms ». En outre, comme expliqué plus haut, le processeur met à jour le profil d'interlocuteur en enregistrant l'information que le prénom est « Jean », et peut utiliser cette information ultérieurement au cours du dialogue.

Les règles peuvent être beaucoup plus complexes. Par exemple, la sortie peut être choisie parmi plusieurs alternatives en fonction de la valeur attribuée à certaines variables et/ou de données contextuelles (par exemple la date, comme dans l'exemple de dialogue présenté plus haut). De même, plusieurs modèles alternatifs peuvent être prévus en entrée, associés à la même ou aux mêmes sorties.

L'arbre de règle R comprend également une étiquette (« tag » en anglais) TG : « #Présentation# ». En l'espèce, cette étiquette permet de rattacher la règle à un « sujet de conversation » (« topic » en anglais), qui regroupe des règles sémantiquement proches - ici, le sujet de conversation est constitué par les présentations des interlocuteurs. En fonction de la valeur de certaines variables, d'un historique de dialogue enregistré dans le profil d'interlocuteur et/où de données contextuelles, les règles marquées par certaines étiquettes peuvent être activées ou désactivées. Ainsi, par exemple, les règles marquées par l'étiquette « Noël » peuvent être activées seulement entre le premier décembre et le quinze janvier (donnée contextuelle) ; les règles marquées par l'étiquette « animaux domestiques » peuvent être désactivées si le profil indique que l'interlocuteur n'en a pas ; lorsqu'un certain nombre de règles portant une étiquette a été appliquée, on peut considérer que le sujet a été traité suffisamment et ces règles peuvent être désactivées pendant un certain temps.

L'historique de dialogue, précité, contient une liste des dialogues précédentes avec leur dates, une liste des réponses et questions énoncées par le robot (les questions déjà posées sont désactivées pour éviter les répétitions), une liste des étiquettes avec leurs états (activée/désactivée) et une liste des sujets qui ont déjà été traités - avec optionnellement une mesure du degré d'approfondissement de chaque sujet. Cet historique se présente sous la forme d'une liste de clefs et valeurs.

Toutes ces caractéristiques concourent à la personnalisation et à la progressivité du dialogue.

## Revendications

1. Procédé de dialogue entre une machine (RT) et au moins un interlocuteur humain (INT), comportant les étapes suivantes, mises en œuvre par ladite machine :
a) identifier ledit interlocuteur humain ;
b) extraire d'une base de données (BDD) un profil d'interlocuteur (INT_PR) comprenant une pluralité de variables de dialogue (VD), au moins une valeur étant attribuée à au moins une desdites variables de dialogue ;
c) recevoir au moins une phrase en provenance dudit interlocuteur, analyser ladite ou de chaque dite phrase en provenance dudit interlocuteur pour en extraire au moins une valeur à attribuer à au moins une variable de dialogue dudit profil d'interlocuteur et enregistrer ladite ou chaque dite valeur dans ledit profil d'interlocuteur; et
d) formuler et émettre au moins une phrase de réponse en fonction au moins de ladite phrase reçue et interprétée lors de l'étape c) et d'une dite variable de dialogue dudit profil d'interlocuteur ;
**caractérisé en ce que** :
- ladite ou au moins une dite phrase reçue et analysée lors de l'étape c) est une phrase prononcée par ledit interlocuteur spontanément ou suite à une phrase non interrogative émise par ladite machine ;
- l'analyse de ladite ou d'au moins une phrase en provenance dudit interlocuteur et la formulation de ladite ou d'au moins une phrase de réponse sont effectuées au moyen d'une pluralité de modèles de phrases (MDP) représentés par des arbres syntaxiques (AS1, AS2) respectifs ;
- ladite étape d) est mise en œuvre au moyen d'une pluralité de règles (R) associant au moins un modèle de phrase en provenance dudit interlocuteur et au moins un modèle de phrase de réponse ;
- au moins une dite règle est marquée par une étiquette (TG) identifiant un sujet de conversation ; et
- lors de ladite étape d), un nombre variable d'étiquettes identifiant chacune un sujet de conversation déterminé sont activées ou désactivées en fonction d'au moins un paramètre du dialogue.

2. Procédé de dialogue selon la revendication 1 dans lequel au moins certains desdits modèles de phrases contiennent au moins un pointeur à une variable de dialogue dudit profil d'interlocuteur.

3. Procédé de dialogue selon l'une des revendications 1 ou 2 dans lequel au moins certains desdits modèles de phrases contiennent au moins un pointeur à au moins un ensemble de termes interchangeables dans une phrase, dit concept (CPT).

4. Procédé de dialogue selon l'une des revendications précédentes dans lequel, lors de ladite étape d), au moins une dite règle associe à un même modèle de phrase en provenance dudit interlocuteur une pluralité de modèles de phrases pouvant servir en tant que phrases de réponse ; et dans lequel, parmi lesdits modèles de phrases de réponse, sont écartés ceux qui contiennent un pointeur à une variable de dialogue à laquelle aucune valeur n'est attribuée dans ledit profil d'interlocuteur.

5. Procédé de dialogue selon l'une des revendications précédentes dans lequel ledit profil d'interlocuteur comprend également un historique de dialogue et, lors de ladite étape d), ladite ou au moins une dite réponse est également formulée en fonction dudit historique de dialogue.

6. Procédé de dialogue selon l'une des revendications précédentes dans lequel, lors de ladite étape d), ladite ou au moins une dite réponse est également formulée en fonction d'au moins un paramètre contextuel acquis ou déterminé par ladite machine.

7. Procédé de dialogue selon l'une des revendications précédentes dans lequel, lors de ladite étape a), ledit interlocuteur humain est identifié au moyen d'un dispositif d'acquisition d'images (DAI), par reconnaissance faciale ou lecture d'un code graphique présenté audit dispositif.

8. Procédé de dialogue selon l'une des revendications précédentes dans lequel, lors de ladite étape b), la machine accède à un serveur distant (SVD) par l'intermédiaire d'un réseau (RC) de communication et télécharge ledit profil d'interlocuteur de ladite base de données qui est stockée sur ledit serveur distant.

9. Procédé de dialogue selon la revendication 8 dans lequel ladite machine, ayant accédé audit serveur distant par l'intermédiaire dudit réseau de communication, charge dans ladite base de données un profil d'interlocuteur mis à jour par l'enregistrement d'au moins une valeur attribuée à au moins une variable de dialogue extraite, lors de ladite étape c), d'au moins une phrase en provenance dudit interlocuteur.

10. Procédé de dialogue selon l'une des revendications précédentes dans lequel ladite machine comprend un processeur (OE) embarqué dans un robot humanoïde (RT).

11. Produit programme d'ordinateur pour la mise en œuvre d'un procédé selon l'une des revendications précédentes lorsque ledit programme est exécuté sur un processeur.

12. Robot humanoïde (RT) comprenant un processeur embarqué (OE) programmé pour mettre en œuvre un procédé selon la revendication 10.

13. Robot humanoïde selon la revendication 12 comprenant également :
- un dispositif d'acquisition d'images coopérant avec ledit processeur embarqué pour identifier un interlocuteur humain ;
- un dispositif d'acquisition sonore coopérant avec ledit processeur embarqué pour recevoir au moins une phrase prononcé par ledit interlocuteur humain ; et
- un dispositif d'émission sonore coopérant avec ledit processeur embarqué pour émettre une dite phrase de réponse.

## Patentansprüche

1. Verfahren für einen Dialog zwischen einer Maschine (RT) und mindestens einem menschlichen Gesprächspartner (INT), das die folgenden von der Maschine durchgeführten Schritte beinhaltet:
a) Identifizieren des menschlichen Gesprächspartners;
b) Extrahieren eines Gesprächspartnerprofils (INT_PR) aus einer Datenbank (BDD), das eine Mehrzahl von Dialogvariablen (VD) umfasst, wobei mindestens ein Wert mindestens einer der Dialogvariablen zugeordnet wird;
c) Empfangen mindestens eines von dem Gesprächspartner kommenden Satzes, Analysieren des oder jedes von dem Gesprächspartner kommenden Satzes, um daraus mindestens einen Wert zum Zuordnen zu mindestens einer Dialogvariablen des Gesprächspartnerprofils zu extrahieren, und Registrieren des oder jedes Wertes in dem Gesprächspartnerprofil; und
d) Formulieren und Senden mindestens eines Antwortsatzes in Abhängigkeit von mindestens dem in Schritt c) empfangenen und interpretierten Satz, und von einer Dialogvariable des Gesprächspartnerprofils;
**dadurch gekennzeichnet, dass**:
- der oder mindestens ein in Schritt c) empfangene(r) und analysierte(r) Satz ein Satz ist, der von dem Gesprächspartner spontan oder auf einen von der Maschine gesendeten Nicht-Fragesatz gesprochen wird;
- das Analysieren des oder mindestens eines vom Gesprächspartner kommenden Satzes und das Formulieren des oder mindestens eines Antwortsatzes mit Hilfe von einer Mehrzahl von Satzmodellen (MDP) erfolgen, die durch jeweilige Syntaxbaumstrukturen (AS1, AS2) repräsentiert sind;
- Schritt d) mit einer Mehrzahl von Regeln (R) durchgeführt wird, die mindestens ein von dem Gesprächspartner kommendes Satzmodell und mindestens ein Antwortsatzmodell assoziieren;
- mindestens eine Regel durch ein Etikett (TG) markiert wird, das ein Gesprächsthema identifiziert; und
- in Schritt d) eine variable Anzahl von Etiketten, die jeweils ein bestimmtes Gesprächsthema identifizieren, in Abhängigkeit von mindestens einem Parameter des Dialogs aktiviert oder deaktiviert werden.

2. Dialogverfahren nach Anspruch 1, bei dem mindestens bestimmte der Satzmodelle mindestens einen Zeiger auf eine Dialogvariable des Gesprächspartnerprofils enthalten.

3. Dialogverfahren nach Anspruch 1 oder 2, bei dem mindestens bestimmte der Satzmodelle mindestens einen Zeiger auf mindestens eine Reihe von in einem Satz austauschbaren Begriffen enthalten, die Konzept (CPT) genannt werden.

4. Dialogverfahren nach einem der vorherigen Ansprüche, bei dem in Schritt d) mindestens eine Regel mehrere Satzmodelle, die als Antwortsätze dienen können, mit einem selben vom Gesprächspartner kommenden Satzmodell assoziiert; und bei dem unter den Antwortsatzmodellen diejenigen verworfen werden, die einen Zeiger auf eine Dialogvariable enthalten, der kein Wert in dem Gesprächspartnerprofil zugeordnet ist.

5. Dialogverfahren nach einem der vorherigen Ansprüche, bei dem das Gesprächspartnerprofil auch eine Dialoghistorie umfasst, und in Schritt c) die oder mindestens eine Antwort auch in Abhängigkeit von der Dialoghistorie formuliert wird.

6. Dialogverfahren nach einem der vorherigen Ansprüche, bei dem in Schritt d) die oder mindestens eine Antwort auch in Abhängigkeit von mindestens einem Kontextparameter formuliert wird, der von der Maschine erfasst oder bestimmt wird.

7. Dialogverfahren nach einem der vorherigen Ansprüche, bei dem in Schritt a) der menschliche Gesprächspartner mittels einer Bilderfassungsvorrichtung (DAI) anhand von Gesichtserkennung oder Lesen eines der Vorrichtung präsentierten grafischen Code identifiziert wird.

8. Dialogverfahren nach einem der vorherigen Ansprüche, bei dem in Schritt b) die Maschine auf einen fernen Server (SVD) über ein Kommunikationsnetzwerk (RC) zugreift und das Gesprächspartnerprofil aus der auf dem fernen Server gespeicherten Datenbank herunterlädt.

9. Dialogverfahren nach Anspruch 8, bei dem die Maschine nach dem Zugreifen auf den fernen Server über das Kommunikationsnetzwerk ein Gesprächspartnerprofil in die Datenbank lädt, das durch die Registrierung mindestens eines Wertes aktualisiert wird, der mindestens einer in Schritt c) extrahierten Dialogvariablen von mindestens einem von dem Gesprächspartner kommenden Satz zugeordnet wird.

10. Dialogverfahren nach einem der vorherigen Ansprüche, bei dem die Maschine einen Prozessor (OE) umfasst, der in einem humanoiden Roboter (RT) installiert ist.

11. Computerprogrammprodukt zum Durchführen eines Verfahrens nach einem der vorherigen Ansprüche, wenn das Programm von einem Prozessor ausgeführt wird.

12. Humanoider Roboter (RT), der einen Bordprozessor (OE) umfasst, der zum Durchführen eines Verfahrens nach Anspruch 10 programmiert ist.

13. Humanoider Roboter nach Anspruch 12, der auch Folgendes umfasst:
- eine Bilderfassungsvorrichtung, die mit dem Bordprozessor zusammenwirkt, um einen menschlichen Gesprächspartner zu identifizieren;
- eine Tonerfassungsvorrichtung, die mit dem Bordprozessor zusammenwirkt, um mindestens einen von dem menschlichen Gesprächspartner gesprochenen Satz zu empfangen; und
- eine Tonsendevorrichtung, die mit dem Bordprozessor zusammenwirkt, um einen Antwortsatz zu senden.

## Claims

1. A method for performing a dialog between a machine (RT) and at least one human speaker (INT), comprising the following steps, implemented by said machine:
a) identifying said human speaker;
b) extracting from a database (BDD) a speaker profile (INT_PR) comprising a plurality of dialog variables (VD), at least one value being assigned to at least one of said dialog variables;
c) receiving at least one sentence originating from said speaker, analyzing said or each said sentence originating from said speaker to extract therefrom at least one value to be assigned to at least one dialog variable of said speaker profile and store said or each said value in said speaker profile; and
d) formulating and emitting at least one response sentence as a function at least of said sentence received and interpreted in step c) and of one said dialog variable of said speaker profile;
**characterized in that**:
- said or at least one said sentence received and analyzed in step c) is a sentence spoken by said speaker spontaneously or following a non-interrogative sentence emitted by said machine;
- the analysis of said or at least one sentence originating from said speaker and the formulation of said or at least one response sentence are performed by means of a plurality of sentence patterns (MDP) represented by respective syntax trees (AS1, AS2);
said step d) is implemented by means of a plurality of rules (R) associating at least one sentence pattern originating from said speaker and at least one response sentence pattern;
- at least one said rule is marked by a tag (TG) identifying a conversation topic; and
- in said step d), a variable amount of tags, each identifying a determined conversation topic, are activated or deactivated as a function of at least one dialog parameter.

2. The method for performing a dialog as claimed in claim 1, in which at least some of said sentence patterns contain at least one pointer to a dialog variable of said speaker profile.

3. The method for performing a dialog as claimed in one of claims 1 or 2, in which at least some of said sentence patterns contain at least one pointer to at least one set of terms that are interchangeable in a sentence, called concept (CPT).

4. The method for performing a dialog as claimed in one of the preceding claims, in which, in said step d), at least one said rule associates, with a same sentence pattern originating from said speaker, a plurality of sentence patterns that can serve as response sentences; and in which, out of said response sentence patterns, those which contain a pointer to a dialog variable to which no value is assigned in said speaker profile are discarded.

5. The method for performing a dialog as claimed in one of the preceding claims, in which said speaker profile also comprises a dialog history and, in said step d), said or at least one said response is also formulated as a function of said dialog history.

6. The method for performing a dialog as claimed in one of the preceding claims, in which, in said step d), said or at least one said response is also formulated as a function of at least one contextual parameter acquired or determined by said machine.

7. The method for performing a dialog as claimed in one of the preceding claims, in which, in said step a), said human speaker is identified by means of an image acquisition device (DAI), by facial recognition or by reading a graphic code presented to said device.

8. The method for performing a dialog as claimed in one of the preceding claims, in which, in said step b), the machine accesses a remote server (SVD) via a communication network (RC) and downloads said speaker profile from said database which is stored on said remote server.

9. The method for performing a dialog as claimed in claim 8, in which said machine, having accessed said remote server via said communication network, loads into said database a speaker profile updated by the storage of at least one value assigned to at least one dialog variable extracted in said step c) from at least one sentence originating from said speaker.

10. The method for performing a dialog as claimed in one of the preceding claims, in which said machine comprises a processor (OE) embedded in a humanoid robot (RT).

11. A computer program product for implementing a method as claimed in one of the preceding claims when said program is run on a processor.

12. A humanoid robot (RT) comprising an embedded processor (OE) programmed to implement a method as claimed in claim 10.

13. The humanoid robot as claimed in claim 12, also comprising:
- an image acquisition device cooperating with said embedded processor to identify a human speaker;
- a sound acquisition device cooperating with said embedded processor to receive at least one sentence spoken by said human speaker; and
- a sound emission device cooperating with said embedded processor to emit one said response sentence.
